# EUROPÄISCHE PATENTSCHRIFT

(11) **EP 1 374 661 B1**
(45) Veröffentlichungstag und Bekanntmachung des Hinweises auf die Patenterteilung: **01.10.2008**
(21) Anmeldenummer: 03012473.9
(22) Anmeldetag: 31.05.2003
(51) Int. Cl.: A01D 41/14

(54) **Vorrichtung und Verfahren zur Lagesteuerung eines Erntegutaufnahmegerätes landwirtschaftlicher Erntemaschinen**
Method and device to regulate positioning of a crop collecting device in a harvester
Procédé et appareil pour le réglage de la position d'un dispositif ramasseur dans une récolteuse

(30) Priorität: 19.06.2002 DE 10227484
(43) Veröffentlichungstag der Anmeldung: 02.01.2004
(73) Patentinhaber: CLAAS Selbstfahrende Erntemaschinen GmbH, 33428 Harsewinkel (DE)
(72) Erfinder: Thiemann, Holger, 33334 Gütersloh (DE); Uhlending, Hubert, 48249 Dülmen (DE); Dammann, Ludwig, 33428 Harsewinkel (DE)

(56) Entgegenhaltungen:
- EP-A- 1 269 823
- DE-A- 10 011 499
- US-A- 5 299 413
- US-A- 5 794 421
- US-A1- 2002 059 787

## Beschreibung

Die Erfindung betrifft eine Vorrichtung und ein Verfahren zur Lagesteuerung eines Erntegutaufnahmegerätes gemäß dem Oberbegriff der Ansprüche 1 und 8.

Landwirtschaftliche Erntemaschinen nehmen in der Regel das auf einem Feldstück gewachsene Erntegut durch ein Erntgutaufnahmegerät direkt von diesem auf. Das Erntegutaufnahmegerät hat dabei die Aufgabe, das Erntegut ohne Verluste vom Feldboden aufzunehmen und dabei, zur Vermeidung von Schäden am Boden und am Erntegutaufnahmegerät, möglichst wenig auf den verbleibenden Erntegutbestand einzuwirken sowie mit dem Feldboden in Kontakt zu kommen.
An landwirtschaftlichen Erntemaschinen sind als Erntegutaufnahmegerät sogenannte Schneidwerke, wie Getreideschneidwerke oder Feldfutterschneidwerke und ferner auch sogenannte Maisgebisse bekannt. Diese schneiden vor der Aufnahme des Erntegutes zunächst das Erntegut vom Feldstück ab. Weiterhin werden als Erntegutaufnahmegeräte sogenannte Maispflücker und Getreidestripper, welche von dem Erntegut lediglich die Kolben beziehungsweise die Ähren abtrennen und dann aufnehmen, an landwirtschaftlichen Erntemaschinen eingesetzt. Weitere bekannte Erntegutaufnahmegeräte sind Pickups oder Rakeups. Diese nehmen das zuvor vom Feldstück abgemähte und auf einen Schwad zusammengeführte Erntegut auf.
Die genannten Erntegutaufnahmegeräte führen nach der Aufnahme des Erntegutes, das Erntegut auf die ungefähre Breite der Bearbeitungsaggregate der landwirtschaftlichen Erntemaschine zusammen. Das Erntegut wird hierfür von dem Erntegutaufnahmegerät an einen Einzugskanal oder allgemein einem Einzug rückwärtig übergeben und dann durch diesen, dem Bearbeitungsprozess der Erntemaschine zugeführt.

Zur Vermeidung von Beschädigungen des Feldboden sowie des Erntegutaufnahmegerätes und zur sauberen Aufnahme des Erntegutes bedarf es der Einhaltung eines bestimmten Bodenabstandes des Erntegutaufnahmegerätes. Hierzu kann der das Erntegutaufnahmegerät tragende Einzugskanal beziehungsweise das Einzugsaggregat in seiner Anlenkung an den Rahmen der landwirtschaftlichen Erntemaschine mittels Hydraulikzylinder verschwenkt und somit die Arbeitshöhe des an dem Einzug angebrachten Erntegutaufnahmegerätes eingestellt werden. Es hat sich als besonders vorteilhaft erwiesen, den Abstand des Erntegutaufnahmegeräte zum Boden durch einen mechanischen Bodentaster zu erfassen. Eine nachgeschaltete Steuereinrichtung steuert in Abhängigkeit davon eine gleichbleibende Arbeitshöhe des Erntegutaufnahmegerätes über dem Feldboden.

Bei größeren Arbeitsbreiten der verschiedenen Erntegutaufnahmegeräten ist es für eine zufriedenstellende Höhenführung jedoch wegen der unebenen Bodenoberfläche erforderlich, den Abstand zum Boden an mehreren Stellen über der Arbeitsbreite verteilt zu ermitteln. Hierzu können an dem Erntegutaufnahmegerät, wie beispielsweise aus der DE 38 07 610 bekannt, mehrere Bodentaster an der Unterseite eines Getreideschneidwerks angeordnet werden. Das in der DE 38 07 610 offenbarte Getreideschneidwerk verfügt jeweils über zwei an den äußeren Enden des Schneidwerkbodens in Fahrtrichtung hinter dem Messerbalken paarweise angebrachte Bodentaster. Jeweils ein Bodentasterpaar liefert einen Abstandswert zum Boden. Von einer Steuereinrichtung werden die beiden Bodenabstandswerte derart verarbeitet, dass der Mittelwert der Bodenabstandswerte die Einstellung des Einzugskanals und damit die Arbeitshöhe des Getreideschneidwerks über dem Boden bestimmt. Das gezeigte Getreideschneidwerk wird an der Verbindungsstelle zum Einzugskanal von zwei an den Seitenwänden des Einzugskanals angeordneten in etwa senkrecht stehenden Hubzylindern von dessen Kolbenstangen getragen. Durch eine gesteuerte Bewegung der Kolbenstangen, kann das Getreideschneidwerk um eine in Fahrtrichtung horizontal liegende Längsachse verschwenkt werden. Die von den Bodentastern ermittelten Bodenabstandswerte werden dafür von einer Steuereinrichtung dazu verwendet, die Querneigung des Getreideschneidwerkes mittels Hubzylinder zu steuern, so dass sich eine gleichmäßige Arbeitshöhe des Getreidescheidwerks und damit eine gleichmäßige Schnitthöhe des Messerbalkens einstellt. Das einseitige Einsacken eines Vorderrades der landwirtschaftlichen Emtemaschine oder eine Änderung der Geländeneigung des Feldstückes wird von den Bodentastem erkannt und automatisch ausgeregelt. Die in Fahrrichtung hinter dem Messerbalken angeordneten Bodentaster erfassen jedoch den Verlauf des Bodens erst nach der Aufnahme des Erntegutes, wodurch immer eine zu späte Ansteuerung der automatischen Bodenkopierung erfolgt und es zu Beschädigungen am Messerbalken des Schneidwerks sowie am Boden kommen kann. Ferner ist die Einhaltung einer gleichmäßigen Schnitthöhe insbesondere bei wechselten Bodenverläufen nicht möglich. Beispielsweise beim Schneiden gegen einen Berg, kann mit dieser Anordnung der Bodentaster eine zu kurze Schnitthöhe erreicht.

Aus der DE 295 19 842 U1 ist ein Hang- Mähdrescher bekannt, der an dem in Fahrtrichtung vorderen Ende des Einzugskanals einen Schwenkadapter aufweist. Das daran angebrachte Getreideschneidewerk kann mittels des Schwenkadapters um eine horizontale und quer zur Fahrtrichtung liegende Achse durch eine hydraulische Steuereinrichtung verschwenkt werden. Durch an dem Schwenkadapter angreifende Hubzylinder erfolgt bei Bedarf eine entsprechende Anpassung des Schnittwinkels des Getreideschneidwerkes im Arbeitsbetrieb des Hang- Mähdreschers. Damit wird es zudem möglich, den Schnittwinkel des Schneidwerks bei unterschiedlichen Schnitthöhen angepasst einstellen zu können. Jedoch fehlt der Bezug dieser Einstellung zu dem momentanen Verlauf des Bodens in Fahrrichtung. Daher kann der Schnittwinkel insbesondere bei wechselten Bodenverläufen nicht an diesen optimal eingestellt werden.
Es ist weiterhin beispielsweise aus der DE 44 06 892 A1 bekannt, den Abstand eines Erntegutaufnahmegerätes zum Boden durch einen in einem Halmteiler eines Getreideschneidwerkes angeordneten Bodenabstandssensoren vor der Erntegutaufnahme berührungsfrei abzutasten. Hierdurch wird eine frühzeitige Reaktion der Bodenkopierung auf Bodenänderung möglich, jedoch insbesondere bei in Fahrtrichtung ansteigendem oder fallendem Gelände kommt es zu unterschiedlichen Schnitthöhen der Schneidwerke und kann ferner durch ein zu frühes Absenken des Schneidwerks, zum Aufsetzen der Schneidwerksmulde auf den Boden und damit zu Beschädigungen an dem selben führen.

Aus der US 2002 0059787-A ist eine Rundballenpresse bekannt, die einen berührungslosen Bodenabstandsensor und ein Bodentastorgan offenbart. Das Dokument EP 1269823-A, das relevant laut Art. 54(3)EPÜ ist, offenbart auch eine Vorrichtung mit zwei Sensoren.

Es ist Aufgabe der Erfindung eine weitere Verbesserung der Bodenkopierung der an landwirtschaftlichen Erntemaschinen angeordneten Erntegutaufnahmegeräten zu erzielen. Diese Aufgabe wird durch die Merkmale der Ansprüche 1 und 12 gelöst.

Erfindungsgemäß wird die Aufgabe dadurch gelöst, dass die wenigstens eine Messeinrichtung den Abstand zum Boden an wenigstens zwei in Fahrtrichtung voneinander beabstandeten Stellen ermittelt. Hierdurch ist eine Ermittlung der Neigung des Erntegutaufnahmegerätes zum Verlauf des Feldbodens in Fahrtrichtung möglich. So kann nunmehr eine Steuereinrichtung für das Erntegutaufnahmegerät die Änderung der Neigung des Geländeprofils ermitteln und diese Änderung zur optimalen Steuerung der Schnitthöhe verwenden. Weiterhin wird durch die erfindungsgemäße Ermittlung von Bodenabstandswerten, ein Einsacken der Maschine bei schwierigen Bodenverhältnissen beziehungsweise die Verwendung von unterschiedlichen Reifendurchmesser an der landwirtschaftlichen Erntemaschine anhand veränderter Abstände zum Boden erkannt. Eine zu tiefe oder zu hohe Einstellung des Erntegutaufnahmegerätes gegenüber dem Boden wird sicher erkannt und eine Beschädigung des Feldbodens beziehungsweise des Erntegutaufnahmegerätes durch Bodenkontakt vorteilhaft vermieden. Weiterhin wird das Auftreten von Verlust an Erntegut sicher verringert.
Bei einer entsprechenden beweglichen Anordnung des Erntegutaufnahmegerätes um eine in Fahrtrichtung liegende Längsachse gegenüber der landwirtschaftlichen Erntemaschine, kann die Querneigung des Erntegutaufnahmegerätes um diese Längsachse in Abhängigkeit von wenigstens zwei ermittelten Abständen in Verbindung mit wenigstens einer Sollarbeitslage von wenigstens einer Steuereinrichtung automatisch vorteilhaft eingestellt werden.
Eine weitere vorteilhafte Ausgestaltung der Erfindung ergibt sich dann, wenn das Erntegutaufnahmegerät um eine quer zur Fahrtrichtung horizontal liegenden Querachse gegenüber der landwirtschaftlichen Erntemaschine beweglich angeordnet ist und eine automatische Einstellung der Längsneigung des Erntegutaufnahmegerätes um die Querachse in Abhängigkeit von wenigstens zwei ermittelten Abständen zum Boden in Verbindung mit wenigstens einer Sollarbeitslage von wenigstens einer Steuereinrichtung möglich wird.
Im Besonderen kann aus wenigstens zwei in Fahrrichtung voneinander beabstandeten Bodenabstandswerten die Schnitthöhe eines als Schneidwerk ausgebildeten Erntegutaufnahmegerätes bestimmt und von wenigstens einer Steuereinrichtung entsprechend in Verbindung mit einer gewählten Schnitthöhe automatisch eingestellt werden. Hierdurch wird eine verbesserte Einhaltung der gewünschten Schnitthöhe und insbesondere bei wechselnden Geländeneigungen erzielt.
Durch die erfindungsgemäße gleichzeitige Ermittlung des Abstandes zum Boden an wenigstens zwei in Fahrtrichtung voneinander beabstandeten Stellen, kann die Genauigkeit der Ermittlung der Neigung des Feldboden zum Erntegutaufnahmegerät weiter erhöht und die entsprechenden Steuerungen der Lage des Erntegutaufnahmegerätes, das heißt die Einhaltung des Abstandes zum Boden, erheblich verbessert werden.

In einer Weiterbildung der Erfindung ermittelt die wenigstens eine Messeinrichtung einen ersten Abstand zum Boden an einer in Fahrtrichtung vor der Erntegutaufnahme des Erntegutaufnahmegerätes liegenden Stelle und wenigstens einen weiteren Abstand zum Boden an einer in Fahrtrichtung hinter der Erntegutaufnahme des Erntegutaufnahmegerätes liegenden Stelle. Hierdurch wird in Fahrtrichtung gesehen, ein möglichst großer Abstand zwischen zumindest den beiden Stellen, an denen der Boden abgetastet wird, erreicht. Dies bewirkt vorteilhaft eine genaue Ermittlung der Lage des Erntegutaufnahmegerätes gegenüber dem Boden. Weiterhin wird vorteilhaft zum einen eine vorausschauende Abtastung vor der Aufnahme des Erntegutes und zum anderen eine Abtastung des Abstandes im Bodenbereich des Erntegutaufnahmegerät erreicht. Eine sicher Überwachung des Abstandes des Erntegutaufnahmegerätes oberhalb des Bodens kann hierdurch erzielt werden. Ferner ist eine annähernd exakte Steuerung der Lage des Erntegutaufnahmegerätes gegenüber dem Boden möglich, wodurch die Beschädigungen am Feldboden und dem Erntegutaufnahmegerät verringert sowie Ernteverluste vorteilhaft vermieden werden.

In einer weiteren Ausgestaltung der Erfindung ermittelt die wenigstens eine Messeinrichtung an der landwirtschaftlichen Erntemaschine den Abstand zum Boden an wenigstens zwei in Fahrtrichtung auf einer Spur hintereinander liegenden Stellen. Diese Ermittlung erbringt eine genaue Ermittlung der Kontur des Feldbodens beziehungsweise der Lage des Erntegutaufnahmegerätes gegenüber dem Boden in Fahrtrichtung der landwirtschaftlichen Erntemaschine. Erstmalig kann hierdurch der sogenannte Schnittwinkel des Erntegutaufnahmegerätes automatisch entsprechend der sensierten Ausrichtung des Erntegutaufnahmegerätes zum Boden und einer bestimmten Sollvorgabe von einer Steuereinrichtung eingestellt und geführt, das heißt das Erntegutaufnahmegerät um eine quer zur Fahrtrichtung der landwirtschaftlichen Erntemaschine und horizontal liegende Querachse verschwenkt werden. Insbesondere für Schneidwerke und Maisgebisse kann der Schnittwinkel vorteilhaft im Arbeitsbetrieb der landwirtschaftlichen Erntemaschine automatisch gesteuert eingehalten werden, wobei es dann völlig unerheblich ist, ob die landwirtschaftliche Erntemaschine bergan oder bergab erntet beziehungsweise unterschiedliche Schnitthöhen gewählt werden oder die Antriebsräder in den Boden einsacken. Das Erntegutaufnahmegerät wird hierbei, bei entsprechender Anlenkung an der landwirtschaftlichen Erntemaschine, erfindungsgemäß automatisch in der Lage zum Boden vorteilhaft mit gleichbleibendem Schnittwinkel und mit gleichbleibender Schnitthöhe geführt. Hierdurch wird eine optimale Erntegutaufnahme sowie eine gleichmäßige Stoppelhöhe erzielt.

In einer besonderen Ausgestaltung der Erfindung, wird das Erntegutaufnahmegerät von einem Einzugskanal an der landwirtschaftlichen Erntemaschine höhenbeweglich angeordnet getragen und an der dem Erntegutaufnahmegerät zugewandten Seite des Einzugskanals ist wenigstens eine Messeinrichtung angeordnet. Eine derartige Anordnung erbringt vorteilhaft die Möglichkeit, dass die Messeinrichtung unabhängig von den Erntegutaufnahmegeräten verwendet werden und außerdem bei abgebautem Erntegutaufnahmegerät, also bei Transportfahrt der landwirtschaftlichen Erntemaschine, an der landwirtschaftlichen Emtemaschine verbleiben kann. Hierdurch wird wenigstens eine elektrische Kupplungsverbindung zwischen Schneidwerk und Einzugskanal eingespart und ferner ein möglichst großer Abstand zu der in Fahrtrichtung beabstandeten weiteren Abtaststelle der wenigstens eine Messeinrichtung erzielt.

In vorteilhafter Weise wird die wenigstens eine Messeinrichtung oberhalb des Erntegutes angeordnet und ermittelt von dort den Abstand zum Boden. Durch diese Anordnung ist eine kombinierte Verwendung der von der Messeinrichtung ermittelten Abstandswerte möglich. Beispielsweise kann aus den Abstandswerten einer oberhalb des Erntegutbestandes angeordneten Erntegutkantenmesseinrichtung auch der Abstand zum Erntegutbestand vorrausschauend ermittelt und zumindest die Änderung der Bestands- beziehungsweise Geländeneigung, längs wie quer zur Fahrtrichtung der landwirtschaftlichen Erntemaschine erkannt und für die Einstellung der Lage des Erntegutaufnahmegerätes gegenüber dem Boden Verwendung finden. Mit dieser Anordnung lässt sich bei entsprechender Anordnung eine weite Vorausschau und damit frühe berührungslose Abtastung von Änderungen im Geländeprofil durchführen und das Erntegutaufnahmegerät entsprechend führen. Ferner werden hierdurch die durchaus empfindlichen Messeinrichtungen vor Beschädigungen geschützt und können konstruktiv mit einfacheren Gehäusen versehen werden.

In einer Weiterbildung der Erfindung wird wenigstens eine Neigung des Erntegutaufnahmegerätes gegenüber der Ebene von einer am Erntegutaufnahmegerät angeordneten Messeinrichtung ermittelt und zur Steuerung der Lage des Erntegutaufnahmegerätes gegenüber dem Boden verwendet. Die erfindungsgemäße Ermittlung des Abstandes zum Boden und die entsprechende Steuerung der Lage des Erntegutaufnahmegerätes gegenüber dem Boden erbringt vorteilhaft die Möglichkeit, auch die Neigung des Bodens, durch eine Messung der Neigung des Erntegutaufnahmegerätes ermitteln zu können. Durch diesen wenigstens einen Neigungswert, lassen sich vorteilhaft geländeneigungsabhängige Steuerungen in der landwirtschaftlichen Erntemaschine vorausschauend an das Geländeprofil einstellen.

In einer weiteren Ausgestaltung der Erfindung wird aus wenigstens zwei in Fahrrichtung voneinander beabstandeten Bodenabstandswerten die Schnitthöhe eines als Schneidwerk ausgebildeten Erntegutaufnahmegerätes bestimmt und von wenigstens einer Steuereinrichtung entsprechend den ermittelten Bodenabstandswerten, die Schnitthöhe in Verbindung mit einem Sollschnitthöhe automatisch eingestellt. Durch die wenigstens zwei in Fahrtrichtung beabstandet ermittelten Abstände des Erntegutaufnahmegerätes zum Boden, kann vorteilhaft der Verlauf des Bodens bezüglich des Erntegutaufnahmegerätes und insbesondere die Lage einer Schneideinrichtung, wie ein Messerbalken am Erntegutaufnahmegerät und damit die Schnitthöhe in Verbindung mit der Anordnung der Messeinrichtung am Erntegutaufnahmegerät berechnen werden. Hierdurch kann eine genauere Einhaltung der gewünschten Schnitthöhe auch im wechselnden Gelände erzielt werden.

Anhand von Ausführungsbeispielen soll die Erfindung nachfolgend näher erläutert werden. Dabei zeigt
- Figur 1: die Seitenansicht eines Mähdreschers mit einem als Schneidwerk ausgebildeten Erntegutaufnahmegerät,
- Figur 2: eine Frontansicht eines Mähdreschers mit Schneidwerk,
- Figur 3: eine aus den Abstandswerten berechnete Bodenfläche und
- Figur 4: eine Draufsicht auf einen Mähdrescher mit Schneidwerk.

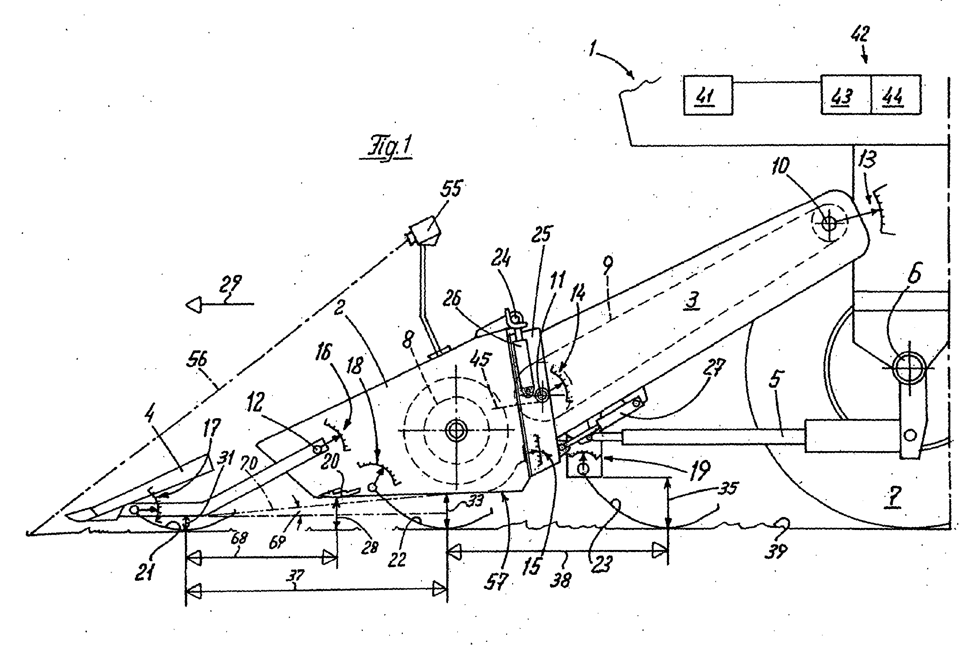

Die Figur 1 zeigt die Seitenansicht eines Mähdreschers 1 mit einem Einzugskanal 3 und einem an dessen vorderen Ende angeordneten Schneidwerk 2. Der Einzugskanal 3 ist um eine Schwenkachse 10 am Mähdrescher 1 beweglich angeordnet und kann durch wenigstens einen an der Achse 6 angelenkten Hubzylinder 5 zur Höhenführung des Schneidwerks 2 über dem Boden 39 um die Schwenkachse 10 verschwenkt werden. An dem in Fahrtrichtung 29 des Mähdreschers 1 vorderen Ende des Einzugskanals 3 ist ein Schwenkadapter 25 angeordnet, der in einer Querachse 11 am Einzugskanal 3 beweglich gelagert ist. Wenigstens ein an dem Einzugskanal 3 angelenkter Hubzylinder 27 greift mit seiner Kolbenstange an dem Schwenkadapter 25 an und ermöglicht eine gesteuerte Verschwenkung des Schwenkadapters 25 um die Querachse 11. An dem Schwenkadapter 25 ist auf der dem Einzugskanal 3 abgelegenen Seite ein Schneidwerk 2 um eine ideelle Längsachse 45 schwenkbar angebracht. Hierzu sind an den beiden Seitenwänden des Schwenkadapters 25 jeweils ein Hubzylinder 26 angeordnet. Die jeweilige Kolbenstange ist an dessen freien Ende mit einem Tragzapfen 24 ausgestattet und greift in entsprechende Aufnahmen an dem Schneidwerk 2 ein. Durch eine gesteuerte Bewegung der Kolbenstangen kann das Schneidwerk 2 gegenüber dem Schwenkadapter 25 beziehungsweise dem Mähdrescher 1 um die Längsachse 45 verschwenkt werden.
An dem Schneidwerk 2 ist an der jeweiligen Seitenwand, jeweils ein in Fahrtrichtung 29 nach vorne weisender Halmteiler 4 um eine Schwenkachse 12 auf Abstand zum Boden 39 höhenbeweglich angelenkt. Zur optimalen Bodenkopierung des Schneidwerkes 2 und möglichst bodenschonender Aufnahme von Erntegut vom Feldboden, sind an dem gezeigten Mähdrescher 1 mehrerer nachfolgend näher beschriebene Sensoren 13; 14; 15; 16; 17; 18; 19 erfindungsgemäß angebracht.
Ein erster Sensor 13 ermittelt die Einstellung des Einzugskanal 3 bezüglich der Halterung am Mähdrescher 1. Ein weiterer Sensor 14 sensiert den Schwenkwinkel des Schwenkadapters 25 bezüglich des Einzugskanals 3. Die Verschwenkung des Schneidwerks 2 gegenüber dem Schwenkadapter 25 um eine Längsachse 45 wird von einem weiteren Sensor 15 erfasst. Ferner wird die Bewegung des Halmteilers 4 an seinem Anlenkpunkt am Schneidwerk 2, durch einen weiteren Sensor 16 sensiert. Eine auslenkende Bewegung entsteht insbesondere dann, wenn der Boden 39 zumindest in Fahrtrichtung 29 stark ansteigt. An der Unterseite des Halmteiler 4 ist ein sich zum Boden 39 hin erstreckender Tastbügel 21 beweglich befestigt. Der Abstand 31;32 zwischen dem Halmteiler 4 und dem Boden 39 wird durch die Auslenkung des Tastbügels 21 von dem Sensor 17 erfasst. Ein weiterer Tastbügel 22 ist an dem Schneidwerksboden 57 angeordnet und erfasst den Abstand 33;34 zwischen dem Schneidwerk 2 und dem Boden 39. Erfindungsgemäß erfassen diese beiden genannten Tastbügel 21 und 22 den Abstand 33;34 zum Boden 39, in Fahrtrichtung 29 gesehen, in einem bestimmten Tastabstand 37. Erfindungsgemäß ist am Einzugskanal 3 ein weiterer Tastbügel 23 angelenkt, welcher mittels des dazu gehörenden Sensors 19, den Abstand 35 des Einzugskanals 3 zum Boden 39 erfasst. Die beiden Tastbügel 22 und 23 sind erfindungsgemäß in Fahrtrichtung 29 gesehen mit einem bestimmten Tastabstand 38 beabstandet angeordnet.
Die einzelnen von den Sensoren 13;14;15;16;17;18;19 erfassten Einstell- und Abstandswerte, werden wenigstens einer Steuereinrichtung 42 über einzelne Signalleitungen oder auch mittels eines Datenbussystems zugeführt und dort in noch näher zu beschreibender Weise erfindungsgemäß zur Steuerung der Bodenkopierung des Schneidwerks 2 verarbeitet. Dabei ist es Aufgabe der elektrischen Steuerung 43 die hydraulische Steuerung 44 für die damit in Verbindung stehenden Hubzylinder 5;26;27 so anzusteuern, dass das Schneidwerk 2 mit einer gleichbleibenden Schnitthöhe 28 bei gleichzeitiger Einhaltung eines vorgegebenen Schnittwinkels über den Boden 39 geführt wird. Der Schnittwinkel ist hierbei bekanntlich als ein in Fahrtrichtung 29 gerichteter Winkel zwischen der geneigten ebenen Fläche der Mähmesserklinge des Messerbalkens 20 und der Fläche des Bodens 39 definiert.
Von einem Bediener des Mähderschers 1 wird mittels der Bedieneinrichtung 41, die vorzugsweise in der Fahrerkabine des Mähdreschers 1 angeordnet ist und mit der Steuereinrichtung 42 in Verbindung steht, die Einstellung des Mähdreschers 1 und auch die Schnitthöhe 28 des Schneidwerks 2 beziehungsweise die Arbeitshöhe 28 eines Erntegutaufnahmegerätes 2 vorgegeben. Diese Vorgabe kann auch direkt aus den allgemeinen Einstellungen des Mähdreschers 1 automatisch abgeleitet werden. Die Ausstattung der landwirtschaftlichen Erntemaschine 1 mit dem momentan angehängten Erntegutaufnahmegerät sowie das zu erntende Erntegut können in einer Bedieneinrichtung 41 der landwirtschaftlichen Erntemaschine 1 allgemein vorausgewählt oder automatisch bestimmt werden. Aus diesen Parametern lässt sich zumindest auch eine Voreinstellung für den optimalen Schnittwinkel des Schneidwerks 2 und eine geeignete Schnitthöhe 28 automatisch ableiten. Die Steuereinrichtung 42 vergleicht nun die von den Sensoren 16;17;18;19 ermittelten Abstände des Schneidwerks 2 zum Boden 39 mit der Schnitthöhen- und Schnittwinkelvorgabe und steuert in Abhängigkeit von einer eventuellen Abweichung die Hubzylinder 5;27 so an, dass die Schnitthöhenund Schnittwinkelvorgabe möglichst genau oder zumindest bestmöglichst eingehalten wird. In der elektrischen Steuerung 43 sind in einem Speichermittel für jeden Sensor 13;14;15;16;17;18;19 Kennlinien oder Wertetabellen, zur Umrechnung der Sensorsignale in absolute Abstände oder Winkel, hinterlegt. Diese Kennlinien oder Wertetabellen können fest vorgegeben oder auch gelernt werden. In einer entsprechenden Lernroutine wird dann die entsprechende Erfassungsgröße manuell oder automatisch über den gesamten möglichen Stellbereich bewegt und der erfasste Sensorwert mittels einer Kennlinie oder Wertetabelle, einem bekannten oder dabei ermittelten Abstand oder Winkel zugeordnet. Ferner kann die Kalibrierung der erfindungsgemäßen Vorrichtung durch die Herbeiführung einer speziellen vorgegebenen Einstellung der Lage des Schneidwerks 2 zu einem ebenen Boden 39 durchgeführt werden. Hierzu wird eine bestimmte Schnitthöhe 28 und ein bestimmter Schnittwinkel manuell eingestellt und durch externe Messmittel überprüft. Die dann vorherrschenden Sensorwerte werden dann den bekannten Einstellwerten zugeordnet und ermöglichen somit eine Aussage über die absoluten Einstellwerten.

Aus den beiden Abtastwerten der Sensoren 17 und 18 kann, gegebenenfalls unter Berücksichtigung des Winkelwertes des Sensors 16, die Neigung des Bodens 39 in Fahrtrichtung 29 zum Schneidwerks 2 berechnet werden. Der Sensorwert des Sensors 16 verändert sich nur, wenn zuvor eine vollständige Auslenkung des Tastbügels 21 erfolgt ist oder die Spitze des Halmteilers 4 durch eine kurzeitig starke Erhöhung des Bodens 39 ausgelenkt wird. Zur Berechnung der Neigung des Bodens 39 gegenüber dem Schneidwerk 2, kann beispielsweise von dem gemessenen Abstand 33, der weitere gemessene Abstand 31 subtrahiert werden. Aus dieser Differenz wird mittels der trigonometrischen Tangens- Funktion in Verbindung mit dem Tastabstand 37, der Winkel 69 zu der Verbindungsstrecke 70 bestimmt werden. Der Winkel dieser Verbindungsstrecke 70 zu der Neigung des Messerbalkens 20 am Schneidwerk 2 ist ein bekannter Winkel. Die Neigung des Messerbalkens 20 zum Boden 39 kann daher aus einer Addition der beiden bekannten Winkel bestimmt werden. Eine Veränderung der Lage des Halmteilers 4 wird durch den Sensor 16 erfasst, hierdurch wird der Winkel der Verbindungsstrecke 70 zu dem Messerbalken 20 verändert. Durch die bekannten geometrischen Zusammenhänge kann der Winkel zwischen dem Messerbalken 20 und der Verbindungsstrecke 70 neu bestimmt werden und bei der Berechnung der Neigung des Bodens 39 zum Schneidwerk 2 entsprechend berücksichtigt werden. Erfindungsgemäß wird daher von der Steuereinrichtung 42 die Auslenkung des Halmteilers 4 anhand der veränderten Neigungsberechnung erkannt und das Schneidwerk 2 entsprechend um die Querachse 11 korrigierend verschwenkt
Die Schnitthöhe 28 kann beispielsweise ebenfalls mittels der trigonometrischen Tangens- Funktion bestimmt werden. Hierzu wird aus dem zuvor bestimmten Winkel 69 und dem Messerabstand 68 ein Teilbetrag der Schnitthöhe 28 berechnet. Zu diesem Teilbetrag wird dann der Abstand 31 und der Abstand zwischen der Verbindungsstrecke 70 und dem Messerbalken 20 addiert. In der Summe entspricht dieses Ergebnis der momentanen Schnitthöhe 28.
Zur Berechnung der Schnitthöhe 28 können auch weitere mathematische Zusammenhänge herangezogen werden. Beispielsweise kann anhand der bekannten Abständen 37;38;68 der jeweiligen Sensoren 17;18;19 in Fahrtrichtung 29 und der gemessenen Abstände 31;33;35, eine Berechnung der Schnitthöhe 28 mittels der Strahlensätze durchgeführt werden.
Generell bewirkt eine Veränderung der Neigung des Bodens 39 eine Veränderung der Schnitthöhe 28 und des Schnittwinkel. Die Steuereinrichtung 42 steuert daraufhin die Stellung des Einzugskanals 3 und des mit ihr gekoppelten Schwenkadapters 25, durch eine entsprechende Verschwenkung um die Schwenkachse 10 beziehungsweise Querachse 11, zur Einhaltung der gewünschten Schnitthöhe 28 beziehungsweise des Schnittwinkels, entsprechend korrigierend an. Steigt beispielsweise der Boden 39 in Fahrtrichtung 29 an, wird diese Änderung zunächst von dem Sensor 17 erfindungsgemäß in Relation zum Abstandswert des Sensors 18, in Richtung und Größe erkannt. Hierauf steuert die Steuereinrichtung 42 den Hubzylinder 27 an und vergrößert damit den Abstand des Halmteilers 4 zum Boden 39. Diese Bewegung führt, durch die von dem Messerbalken 20 beabstandete Querachse 11, auch zu einer Vergrößerung der Schnitthöhe 28. Folglich wird das Schneidwerk 2 durch eine Absenkung des Einzugskanals 3 mittels der Hubzylinder 5 von der Steuereinrichtung 42 erneut an die gewünschte Schnitthöhe 28 angepasst. Dieser Ablauf wiederholt sich so lange, bis entsprechend der in Fahrtrichtung 29 weiteren Vorfahrt des Mähdreschers 1, die Änderung der Bodenneigung nach dem Tastabstand 37 auch den erfindungsgemäß in Fahrtrichtung 29 nachfolgend beabstandet angeordneten Tastbügel 22 erreicht hat.

Die Neigungsänderung lenkt nun beide Tastbügel 21 und 22 in die gleiche Richtung aus. Hierauf reagiert die Steuereinrichtung 42 mit einer Anhebung des Schneidwerks 2 mittels einer Verstellung des Einzugskanals 3, worauf der Halmteiler 4 erneut weiter angehoben und mit einem zu großen Abstand zum Boden 39 betrieben wird. Die Steuereinrichtung 42 ändert daher die Stellung des Schwenkadapters 25 und senkt hierdurch den Halmteiler 4 auf den für die gewünschte Schnitthöhe 28 notwendigen Abstand zum Boden 39 ab. Diese Vorgänge wiederholen sich, bis bei weiterer Vorfahrt des Mähdreschers 1 in Fahrtrichtung 29, die Neigungsänderung des Bodens 39, die Reifen 7 des Mähdreschers 1 erreicht haben. Hierdurch erfolgt nun eine Anhebung des gesamten Mähdreschers 1 gegenüber dem Boden 39 und verursacht eine entsprechende Vergrößerung der beiden ermittelten Abstandwerte der Sensoren 17 und 18. Die Steuereinrichtung 42 senkt folglich den Einzugskanal 3 ab und stellt einen neuen Schnittwinkel ein. Dieser Ablauf wiederholt sich, bis die beispielhaft vorausgesetzte Neigungsänderung des Bodens 39, die nicht dargestellten Hinterräder des Mähdreschers 1 erreicht hat. Der Mähdrescher 1 fährt nun bei geänderter Bodenneigung mit gleichbleibender Schnitthöhe 28 und Schnittwinkel bis von dem Sensor 17 erneut eine Änderung der Bodenneigung in Fahrtrichtung 29 erkannt wird.
Handelt es sich bei dem genannten Mähdrescher 1 um einen Hang-Mähdrescher, wird der Rahmen des Mähdreschers 1 für eine Optimierung der Arbeitsprozesses im Mähdrescher 1 gegenüber der Achse 6, beim Erreichen der Reifen 7 der zuvor im Beispiel genannten Änderung der Bodenneigung, abgesenkt. Hierdurch entsteht auch eine tiefere Lage der Schwenkachse 10 des Einzugskanals 3 gegenüber dem Boden 39 und bewirkt eine Veränderung der Schnitthöhe und des Schnittwinkels. Dies wird dann von den Sensoren 17 und 18 erkannt und führt automatisch zu einer Anhebung des Einzugskanals 3 und einer entsprechenden Korrektur der Einstellung des Schwenkadapters 25.
Generell kann die Reaktionszeit und -geschwindigkeit der Steuereinrichtung 42 auf eine sich ändernde Neigung des Bodens 39 in Fahrtrichtung 29, in Abhängigkeit von der zurückgelegten Wegstrecke und der bekannten Reaktionszeiten der Ausführungselemente 5;27;42 erfolgen. Die Lage der Bodenänderung in Fahrtrichtung 29 kann hierdurch dann auf den Strecken der Tastabstände 37 und 38 ermittelt werden. Es wird eine gesteuerte Änderung der Schnitthöhe 28 entsprechende der Lage des sich ändernden Bodens 39 und damit eine gleichmäßige Schnitthöhe 28 möglich werden.
Das Ausführungsbeispiel wurde nur anhand der beiden Tastbügel 21 und 22 beschrieben, ist jedoch auf diese nicht beschränkt. So können durchaus weitere Sensoren 17;18;19 mit weiteren Tastbügeln 21;22;23 erfindungsgemäß an dem Mähdrescher 1 angebracht werden und zur Steuerung der Lage des Schneidwerks 2 gegenüber dem Boden 39 ausgewertet werden. Eine Verbesserung der Erkennung des Bodenprofils zumindest in Fahrrichtung 29 ist hierdurch möglich.
In der Figur 1 ist beispielsweise ein weiterer Sensor 19 mit einem Tastbügel 23 an dem Einzugskanal 3 angeordnet. Der sensierte Abstand 35 kann zusätzlich von der Steuereinrichtung 42 abgefragt und ausgewertet werden. Durch die drei in Fahrtrichtung 29 beabstandet ermittelten Bodenabstände, kann das Bodenprofil besser abgetastet und insbesondere können nunmehr in Fahrtrichtung 29 gekrümmte Profile erkannt und zur Regelung der Lage des Schneidwerks 2 gegenüber dem Boden 39 verwendet werden. Der Sensor 19 kann ebenfalls anstelle einer der beiden vorausliegenden Sensoren 17 oder 18 erfindungsgemäß Verwendung finden, wobei insbesondere die Anordnung eines Sensors 18 am Schneidwerksboden 57 und eines Sensors 19 am Einzugskanal 3 eine in Fahrtrichtung 29 auf einer Spur liegende Abtastung des Bodens 29 einfach möglich macht.

Die beispielhaft dargestellten mechanischen Tastbügel 21;22;23 können auch als berührungsfreie oder anders geartete Sensoren einzeln oder in Kombination ausgebildet sein. Weitere derartig verwendbare Sensoren sind dem Fachmann bekannt. Die Auswahl eines Sensors 17;18;19 liegt daher im Ermessen des Fachmanns, wobei vielfach auch die Einsatzbedingung der landwirtschaftlichen Emtemaschine, wie Bodenart, Bodenfeuchte, Stoppeln und Feldunterbewuchs, die zu wählende Sensorart bestimmen. So können anstelle eines Tastbügels auch Tasträder sowie berührungslos arbeitende Sensoren wie Ultraschallsensoren sowie Radarsensoren oder Lasersensoren zum Einsatz kommen. Insbesondere können diese Sensoren beispielsweise auch die Bewegung von mit dem Boden in Verbindung stehenden Stützrädern an Erntegutaufnahmegeräten erfassen. Für die vorliegende Erfindung ist es lediglich von Bedeutung, dass der Abstand zwischen der landwirtschaftlichen Emtemaschine und dem Boden 39 in Fahrtrichtung 29 beabstandet, an mehr als einer Stelle abgetastet wird. Dies kann nacheinander oder gleichzeitig durch mehrere hintereinander angeordnete Tastbügel 21;22;23 oder auch durch einen in Fahrtrichtung 29 scannenden Sensor, wie einen Laserscanner oder im speziellen auch eine Aufzeichnung und Auswertung mehrerer nacheinander ermittelter Abstandswerte eines Sensors 17; 18; 19 realisiert werden.
Ferner kann ein Abstandswert zum Boden 39 auch von einem oberhalb des Erntegutbestandes angeordneten Kantensensors 55 ermittelt werden. Dieser tastet unter anderem beispielsweise mit einem Laserstrahl 56 den Abstand zum Boden 39 berührungsfrei ab. Anhand einer bekannten Anbringungsposition und Ausrichtung am Schneidwerk 2 beziehungsweise am Mähdrescher 1, kann ein absoluter Abstand zum Boden 39 oder zumindest eine Abstandsänderung des Bodens 39 gegenüber dem Schneidwerk 2 oder dem Mähdrescher 1 in Fahrtrichtung 29 vorausschauend erkannt und von der erfindungsgemäßen Vorrichtung zur automatisierten Bodenkopierung des Scheidwerks 2 erfindungsgemäß in Verbindung mit einem weiteren Abstandswert 31;33;35 verwendet werden.

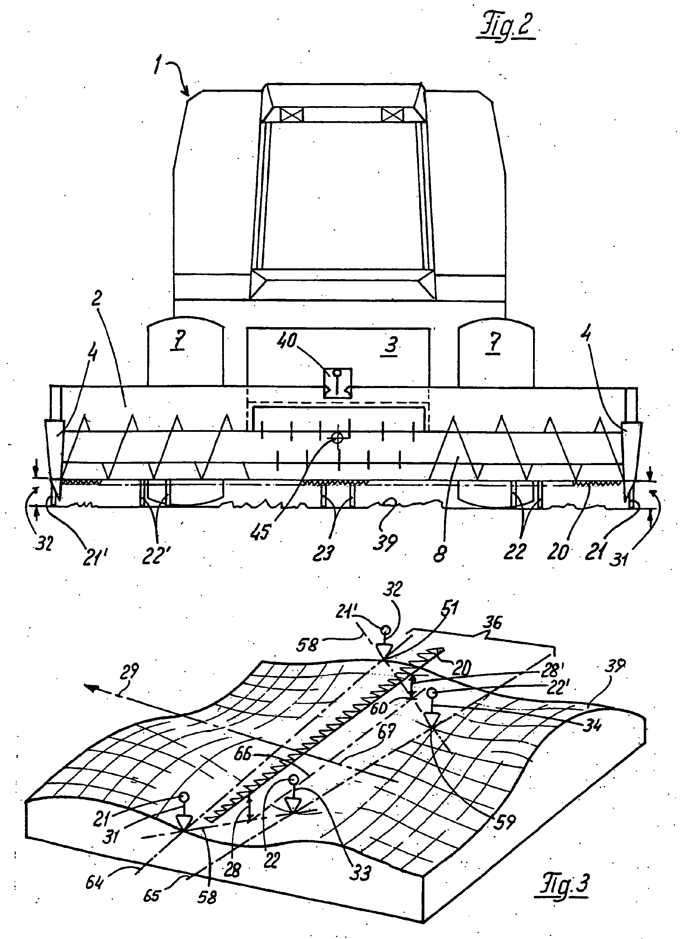

In der Figur 2 ist eine Frontansicht eines Mähdreschers 1 mit Schneidwerk 2 dargestellt. Über die Arbeitsbreite des Schneidwerks 2 verteilt sind mehrere Tastbügel 22;22' an dem Schneidwerksboden 57 angebracht. Weiterhin ist jeweils ein Tastbügel 21;21' an dem an den Seitenwänden des Schneidwerks 2 angelenkten Halmteiler 4 angeordnet. Ein weiterer Tastbügel 23 ist an dem Einzugskanal 3 befestigt. Wie jedoch aus der Figur 1 zu entnehmen, sind diese Tastbügel 21;21';22;22';23 erfindungsgemäß in Fahrtrichtung 29 voneinander beabstandet angeordnet. Die Tastbügel 21;21' in den Halmteilern 4 erfassen in Fahrrichtung 29 gesehen den Boden 39 auf gleicher Höhe. Die Tastbügel 22;22' am Schneidwerk 2 sind ebenfalls in Fahrtrichtung 29 auf gleicher Höhe angeordnet und tasten gegenüber den Tastbügel 21;21' den Boden 39 in Fahrtrichtung 29 zurückliegend ab. Der Tastbügel 23 am Einzugskanal 3, ist den Bodentastern 21;21';22;22' in Fahrtrichtung 29 erfindungsgemäß nachgeordnet beabstandet angebracht.
Aus den von den Tastbügeln 21;21';22;22';23 ermittelten Abständen 31;32;33;34;35, kann jeweils aus den in gleicher Höhe angeordneten Tastbügeln 21;21' und 22;22' eine Querneigung des Bodens 39 errechnet und in Verbindung mit den in Fahrtrichtung 29 vorhandenen Abständen zwischen dem Messerbalken 20 und den Tastbügeln 21;21';22;22';23, auch zu einer Querneigung des Bodens 39 unterhalb des Messerbalkens 20 verrechnet und dann zur Steuerung der Quemeigung des Messerbalkens 20 verwendet werden.
Die völlige Entkopplung des Schneidwerks 2 von der Ausrichtung des Mähdreschers 1 zum Boden 39 und dessen erfindungsgemäß optimal erzielte Bodenkopierung ermöglichen auch eine vorausschauende Ermittlung einer Änderung der Neigung des Bodens 39 bezüglich des Mähdreschers 1. Ferner ist die Neigung des Bodens 39 gegenüber einer waagrechten Ebene hiermit erfassbar. An dem Schneidwerk 2 in der Nähe der Längs- und Querachse 45;11 ein Neigungssensor 40 erfindungsgemäß angebracht. Die zumindest eine ermittelte Neigung des Bodens 39 beziehungsweise des Schneidwerks 2, kann beispielsweise zur Steuerung der Neigung eines Hang- Mähdreschers in Längs- beziehungsweise Querrichtung oder zur Einstellung der Reinigungseinrichtung eines Mähdreschers 1 zumindest vorausschauend verwendet und/oder von einer Steuereinrichtung mit einem weiteren Neigungssensor an der Achse 6 des Mähdreschers 1 verrechnet werden. Hierdurch werden Fehler bei der Steuerung, durch beispielsweise ein einseitiges Einsacken eines Reifens 7, vermieden.

Wie in der Figur 3 näher erläutert, lässt sich aus den beiden Abständen 31;32 der in den Halmteilern 4 angeordneten Tastbügeln 21;21', die Neigung des Bodens 39 anhand der Verbindungslinie 64 gegenüber der Lage der Halmteiler 4 quer zur Fahrtrichtung 29 und parallel zum Messerbalken 20 vorausschauend ermitteln. Von der Steuereinrichtung 42 wird diese Querneigung des Bodens 39 zur Einstellung der Querneigung des Schneidwerks 2 gegenüber dem Boden 39 verwenden. Hierzu werden die an dem Einzugskanal 3 beidseitig angeordneten in der Figur 1 dargestellten Hubzylinder 26 entsprechend angesteuert und das Schneidwerk 2 um die ideelle Längsachse 45 ausgleichend so lange verschwenkt, bis der Messerbalken 20 in etwa parallel zum Boden 39 ausgerichtet arbeitet. Die optimale Ausrichtung wird dann an den gleich großen sensierten Abständen 31;32 der Tastbügel 21;21' erkannt.
Erfindungsgemäß wird die Querneigung entlang der Verbindungslinie 65 auch von den unterhalb des Schneidwerkbodens 57 in Fahrtrichtung 29 hinter dem Messerbalken 20 liegenden Bodentastern 22 und 22' quer zur Fahrrichtung 29 abgetastet und von einer Steuereinrichtung 42 ermittelt. Aus den beiden ermittelten Querneigungen des Bodens 39, kann beispielsweise von der Steuereinrichtung 42 unter Berücksichtigung der einzelnen Abstände der Tastbügel 21;21';22;22' in Fahrtrichtung 29 gegenüber dem Messerbalken 20, eine gemittelte Querneigung des Bodens 39 in Höhe des Messerbalkens 20 errechent und zur Steuerung der Querneigung des Messerbalkens 20 verwendet werden.
Ferner kann aus den Abständen 31;32;33;34 von der Steuereinrichtung 42 oder einer anderen Einrichtung auf dem Mähdrescher 1, der Verlauf des Bodens 39 erfindungsgemäß anhand einer Bodenfläche 36 berechnet werden. Diese Bodenfläche 36 wird durch die Lage der Abtastpunkte der Tastbügel 21;21';22;22' am Boden 39 und deren sensierten Abstände 31;32;33;34 bestimmt. Der Abstand 35 der Tastbügel 23 am Einzugskanal 3 kann hierbei femer mit einbezogen werden. In der Figur 3 wird zur besseren Übersicht, die jeweilige Lage des Tastbügels 21;21';22,22' bezüglich des Bodens 39 als Kreise und durch die Länge des dargestellten Pfeils, der jeweilige sensierte Abstand 31;32,33;34 dargestellt. Die hier gezeigt Bodenfläche 36 ist in Richtung des Tastbügels 21' leicht verwunden, da der momentan sensierte Abstand 32, geringer als die Abstände 31 ;33;34 ist. Hierdurch wird auf der Verbindungsstrecke 58, zwischen den Abtaststellen 51 und 59 in Höhe der Schnittstelle 60 des Messerbalkens 20, eine gegenüber Schnitthöhe 28 geringerer Schnitthöhe 28' von einer Steuereinrichtung 42 erkannt.
Anhand der bekannten Anordnung des Messerbalkens 20 bezüglich der Tastbügel 21;21';22;22', kann ferner in Höhe der gezeigten Verbindungsstrecke 66, die Neigung des Messerbalkens 20 gegenüber der Neigung der berechneten Bodenfläche 36 unterhalb des Messerbalkens 20 bestimmt und hieraus eine verbesserte Steuerung der Querneigung des Messerbalkens 20 und damit auch der Lage des Schneidwerks 2 gegenüber dem Boden 39 erzielt werden.
Die berechnete Bodenfläche 36 gibt ferner die Neigung des Bodens 39 in Fahrtrichtung 29, hier durch die Verbindungsstrecke 67 angezeigt, an, wodurch erfindungsgemäß die automatische Einstellung des Schnittwinkels hieraus abgeleitet und gesteuert werden kann.

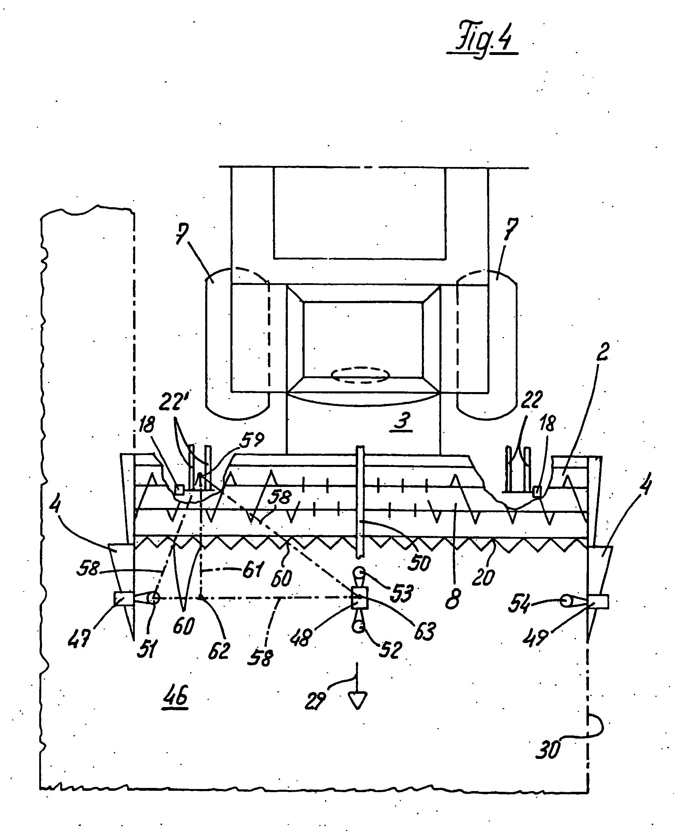

Figur 4 zeigt eine Draufsicht auf einen Mähdrescher 1 mit einem Schneidwerk 2. An dem Schneidwerk 2 sind an den Halmteilern 4 jeweils ein zum Boden 39 hin ausgerichteter Radarsensor 47;49 angebracht. Dieser tastet mittels einer Radarwelle den Abstand zwischen dem Radarsensor 47;49 und dem Boden 39 berührungslos jeweils an den Abtaststellen 51 und 54 ab. An einem Haltearm 50 ist ein weiterer Radarsensor 48 oberhalb des Getreidefeldes 46 zum Boden 39 hin ausgerichtet angeordnet. Dieser tastet erfindungsgemäß den Abstand zum Boden 39 in Fahrtrichtung 29 auf einer Spur liegend an zwei voneinander beabstandeten Abtaststellen 52;53 ab. Durch diese Abtastung ist erfindungsgemäß schon vor der Aufnahme von Erntegut von dem Feldstück, eine Ermittlung der Neigung des Bodens 39 in Fahrtrichtung 29 möglich. Hierdurch kann vorausschauend die Lage des Schneidwerks 2 gegenüber dem Boden 39 und insbesondere die Schnitthöhe 28 und die Längsneigung, das heißt der Schnittwinkel automatisiert geführt werden. In Verbindung mit den beiden äußeren Radarsensoren 47 und 49 in den Halmteilem 4, kann die Neigung des Bodens 39 parallel zum Messerbalken 20 bestimmt und vorausschauend eingestellt werden. Unterhalb des Schneidwerks 2 sind in Fahrtrichtung 29 hinter dem Messerbalken 20 jeweils zwei Tastbügel 22 und 22' zwischen den Seitenwänden des Schneidwerks 2 und dem Einzugskanal 3 mit jeweils einem Sensor 18 angeordnet. Die jeweils paarweise in Fahrtrichtung 29 parallel angeordneten Bügel sind einenends an einer gemeinsamen Welle angelenkt, wodurch eine Mittelung der jeweiligen Auslenkung des Bügels bewirkt wird. Hierdurch wird vorteilhaft vermieden, dass eine im Boden 39 befindliche Spur abgetastet und zu einem vom Sensor 18 sensierten verfälschten Abstand 33;34 führt.
In der gezeigten Figur 4 sind beispielhaft Verbindungsstrecken 58;61 zwischen mehreren Abtaststellen 51;59;62;63 eingezeichnet. Die jeweilige Streckenlänge errechnet sich aus den bekannten Anbauorten der Sensoren 22';47;48 beziehungsweise der Lage der Abtaststellen 51;59;62;63 und sind daher bekannt. Ferner ist die relative Lage des Messerbalkens 20 zu diesen Abtaststellen 51;59;62;63 und daher auch die Lage der Schnittstellen 60 auf den Verbindungsstrecken 58 bestimmbar. Die ermittelte Neigung der jeweiligen Verbindungsstrecke 58;61 ermöglicht die Bestimmung der Schnitthöhe 28 an der jeweiligen Schnittstelle 60. Hierdurch wird eine Ermittlung der Schnitthöhe 28 über die Schneidwerksbreite verteilt an mehreren Schnittstellen 60 möglich. Eine entsprechende Steuerung der Querneigung und der Schnitthöhe 28 des Schneidwerks 2 kann hierdurch einfach durchgeführt werden.
Die Längsneigung des Schneidwerks 2 und damit der Schnittwinkel, kann beispielsweise aus der Neigung der in Fahrtrichtung 29 verlaufenden Längsstrecke 61, zwischen der Abtaststelle 59 und der fiktiven Abtaststelle 62 ermittelt werden und entsprechend von der Steuereinrichtung 42 zur Einstellung und Einhaltung des Schnittwinkels verwendet werden. Der fiktive Abtastpunkt 62 kann aus der Verbindungsstrecke 58 zwischen den Abtaststellen 51 und 63, deren bekannten Lagen bezüglich der Anbringungsorte der Sensoren 22';47;48 am Schneidwerk 2 sowie deren aktuell sensierten Abstandwerten zum Boden 39 errechnet werden.

Es ist für einen Fachmann in der Landtechnik offensichtlich, wie er die für ein Schneidwerk 2 genannten Ausführungsbeispiele an einem Mähdreschern 1 auf weitere Erntegutaufnahmegeräte und landwirtschaftliche Erntemaschinen übertragen kann.

Die jeweilige erfindungsgemäße optimale Anordnung einzelner oder mehrerer Sensoren 17;18;19;47;48;49 an unterschiedlichen Erntegutaufnahmegeräten oder den landwirtschaftlichen Erntemaschinen wird vielfach von den Einsatzbedingungen vorgegeben und ist ferner von einem Fachmann durch einfache Versuche leicht ermittelbar.

### Bezugszeichenliste:

- 1: Mähdrescher
- 2: Schneidwerk
- 3: Einzugskanal
- 4: Halmteiler
- 5: Hubzylinder
- 6: Achse
- 7: Reifen
- 8: Einzugsschnecke
- 9: Einzugskette
- 10: Schwenkachse Einzugskanal
- 11: Querachse
- 12: Schwenkachse Halmteiler
- 13: Sensor Einzugskanal
- 14: Sensor Querachse
- 15: Sensor Längsachse
- 16: Sensor Halmteiler
- 17: Sensor Bodentaster Halmteiler
- 18: Sensor Bodentaster Schneidwerk
- 19: Sensor Bodentaster Einzugskanal
- 20: Messerbalken
- 21: Tastbügel Halmteiler
- 21': Tastbügel Halmteiler
- 22: Tastbügel Schneidwerk
- 22': Tastbügel Schneidwerk
- 23: Tastbügel Einzugskanal
- 24: Tragzapfen
- 25: Schwenkadapter
- 26: Hubzylinder Querneigung
- 27: Hubzylinder Längsneigung
- 28: Schnitthöhe
- 28': Schnitthöhe
- 29: Fahrtrichtung
- 30: Bestandskante
- 31: Abstand Halmteiler links
- 32: Abstand Halmteiler rechts
- 33: Abstand Schneidwerk links
- 34: Abstand Schneidwerk rechts
- 35: Abstand Einzugskanal
- 36: Berechnete Bodenfläche
- 37: Tastabstand 1
- 38: Tastabstand 2
- 39: Boden
- 40: Neigungssensor
- 41: Bedieneinrichtung
- 42: Steuereinrichtung
- 43: Elektrische Steuerung
- 44: Hydraulische Steuerung
- 45: Längsachse
- 46: Getreidefeld
- 47: Radarsensor Halmteiler rechts
- 48: Radarsensor Schneidwerk mitte
- 49: Radarsensor Halmteiler links
- 50: Haltearm
- 51: Abtaststelle rechts
- 52: Abtaststelle mitte vorne
- 53: Abtaststelle mitte hinten
- 54: Abtaststelle links
- 55: Kantensensor
- 56: Laserstrahl
- 57: Schneidwerksboden
- 58: Verbindungsstrecke
- 59: Abtaststelle rechts hinten
- 60: Schnittstellen
- 61: Längsstrecke
- 62: fiktive Abtaststelle
- 63: Abtaststelle vorne mitte
- 64: Verbindungslinie
- 65: Verbindungslinie
- 66: Verbindungsstrecke
- 67: Verbindungsstrecke
- 68: Messerabstand
- 69: Neigungswinkel
- 70: Verbindungsstrecke

## Patentansprüche

1. Vorrichtung zur Lagesteuerung eines Erntegutaufnahmegerätes (2) an einer landwirtschaftlichen Erntemaschine, insbesondere Mähdrescher (1) oder Feldhäcksler, mit einem daran zumindest höhenbeweglich angeordnetem Erntegutaufnahmegerät (2) und mit wenigstens einer Messeinrichtung (17, 35, 48) zur Bestimmung des Abstandes des Erntegutaufnahmegerätes (2) zum Boden (39), wobei die Lage des Erntegutaufnahmerätes (2) gegenüber dem Boden (39) von wenigstens einer Steuereinrichtung (42) der landwirtschaftlichen Erntemaschine in Abhängigkeit vom ermittelten Bodenabstand einstellbar ist,
**dadurch gekennzeichnet,**
**dass** die wenigstens eine Messeinrichtung (17, 35, 48) den Abstand (31, 32, 33, 34, 35) zum Boden (39) an wenigstens zwei in Fahrtrichtung (29) voneinander beabstandeten Stellen ermittelt und die Steuereinrichtung (42) aus den wenigstens zwei Abständen (31, 32, 33, 34, 35) die Neigung des Bodens (39) in Fahrtrichtung (29) zum Erntegutaufnahmegerät (2) berechnet.

2. Vorrichtung nach Anspruch 1,
**dadurch gekennzeichnet, dass**
die wenigstens eine Messeinrichtung (17;35;48) den Abstand (31;32;33;34;35) zum Boden (39) an wenigstens zwei in Fahrtrichtung (29) voneinander beabstandeten Stellen (51;52) gleichzeitig ermittelt.

3. Vorrichtung nach wenigstens einem der vorherigen Ansprüche 1 oder 2,
**dadurch gekennzeichnet, dass**
die wenigstens eine Messeinrichtung (17;35;48) einen ersten Abstand (31;32) zum Boden (39) an einer in Fahrtrichtung (29) vor der Erntegutaufnahme des Erntegutaufnahmegerätes (2) liegenden Stelle (51 ;52;53;54) und wenigstens einen weiteren Abstand (33;34;35) zum Boden (39) an einer in Fahrtrichtung (29) hinter der Erntegutaufnahme des Erntegutaufnahmegerätes (2) liegenden Stelle (59) ermittelt.

4. Vorrichtung nach wenigstens einem der vorherigen Ansprüche 1 bis 3,
**dadurch gekennzeichnet, dass**
die wenigstens eine Messeinrichtung (17;35;48) an der landwirtschaftlichen Erntemaschine (1) den Abstand (31;32;33;34;35) zum Boden (39) an wenigstens zwei in Fahrtrichtung (29) auf einer Spur hintereinander liegenden Stellen (52;53) ermittelt.

5. Vorrichtung nach wenigstens einem der vorherigen Ansprüche 1 bis 4,
**dadurch gekennzeichnet, dass**
das Erntegutaufnahmegerät (2) von einem Einzugskanal (3) an der landwirtschaftlichen Erntemaschine (1) höhenbeweglich angeordnet getragen wird und an der dem Erntegutaufnahmegerät (2) zugewandten Seite des Einzugskanals (3) wenigstens eine Messeinrichtung (19;35) angeordnet ist.

6. Vorrichtung nach wenigstens einem der vorherigen Ansprüche 1 bis 5,
**dadurch gekennzeichnet, dass**
wenigstens zwei Messeinrichtung (21;22;23;48;55) quer zur Fahrtrichtung (29) voneinander beabstandet angeordnet, jeweils wenigstens einen Abstand (31 ;32;33;34;35) zum Boden (39) ermitteln.

7. Vorrichtung nach wenigstens einem der vorherigen Ansprüche 1 bis 6,
**dadurch gekennzeichnet, dass**
die wenigstens eine Messeinrichtung (48;55) den Abstand (31;32;33;34;35) zum Boden (39) mittels eines Tastbügels (21,21';22;22';23) ermittelt.

8. Vorrichtung nach wenigstens einem der vorherigen Ansprüche 1 bis 7,
**dadurch gekennzeichnet, dass**
die wenigstens eine Messeinrichtung (47;48;49;55) den Abstand (31;32;33;34;35) zum Boden (39) berührungslos ermittelt.

9. Vorrichtung nach wenigstens einem der vorherigen Ansprüche 1 bis 8,
**dadurch gekennzeichnet, dass**
die wenigstens eine Messeinrichtung (48;55) oberhalb des Erntegutes (46) angeordnet den Abstand (31;32;33;34;35) zum Boden (39) ermittelt.

10. Vorrichtung nach wenigstens einem der vorherigen Ansprüche 1 bis 9,
**dadurch gekennzeichnet, dass**
die wenigstens eine Messeinrichtung (48;55) als Kantensensor (55) ausgebildet, wenigstens einen Abstand (31;32;33;34;35) zum Boden (39) ermittelt.

11. Vorrichtung nach wenigstens einem der vorherigen Ansprüche 1 bis 10,
**dadurch gekennzeichnet, dass**
wenigstens eine Neigung des Erntegutaufnahmegerätes (2) gegenüber einer waagerechten Ebene von einem am Erntegutaufnahmegerät (2) angeordneten Neigungssensor (40) ermittelt und zumindest zur Einstellung wenigstens eines Parameters der landwirtschaftlichen Erntemaschine verwendet wird.

12. Verfahren zur Lagesteuerung eines Erntegutaufnahmegerätes (2) an einer landwirtschaftlichen Erntemaschine, insbesondere Mähdrescher (1) oder Feldhäcksler, mit einem daran zumindest höhenbeweglich angeordnetem Erntegutaufnahmegerät (2) und mit wenigstens einer Messeinrichtung (17, 35, 48) zur Bestimmung des Abstandes des Erntegutaufnahmegerätes (2) zum Boden (39), wobei die Lage des Erntegutaufnahmegerätes (2) gegenüber dem Boden (39) von wenigstens einer Steuereinrichtung (42) der landwirtschaftlichen Erntemaschine in Abhängigkeit vom ermittelten Bodenabstand einstellbar ist,
**dadurch gekennzeichnet,**
**dass** von wenigstens einer Messeinrichtung (17, 35, 48) der Abstand (31, 32, 33, 34, 35) des Erntegutaufnahmegerätes (2) zum Boden (39) an wenigstens zwei in Fahrtrichtung (29) voneinander beabstandeten Stellen ermittelt und wenigstens eine Steuereinrichtung (42) aus wenigstens zwei Abständen (31, 32, 33, 34, 35) die Neigung des Bodens (39) in Fahrtrichtung (29) zum Erntegutaufnahmegerät (2) berechnet und die Lage des Erntegutaufnahmegerätes (2) in Abhängigkeit von den wenigstens zwei ermittelten Abständen (31, 32, 33, 34, 35) und in Verbindung mit wenigstens einer Sollarbeitslage von der Steuereinrichtung (42) automatisch eingestellt wird.

13. Verfahren nach Anspruch 12,
**dadurch gekennzeichnet, dass**
das Erntegutaufnahmegerät (2) um eine in Fahrtrichtung (29) liegende Längsachse (45) gegenüber der landwirtschaftlichen Erntemaschine (1) beweglich angeordnet ist und die Querneigung des Erntegutaufnahmegerätes (2) um die Längsachse (45) in Abhängigkeit von wenigstens zwei ermittelten Abständen (31;32;33;34;35) zum Boden in Verbindung mit wenigstens einer Sollarbeitslage, insbesondere einer gewählten Schnitthöhe (28), von wenigstens einer Steuereinrichtung (42) automatisch eingestellt wird.

14. Verfahren nach wenigstens einem der vorherigen Ansprüche 12 oder 13,
**dadurch gekennzeichnet, dass**
das Erntegutaufnahmegerät (2) um eine quer zur Fahrtrichtung (29) horizontal liegenden Querachse (11) gegenüber der landwirtschaftlichen Erntemaschine (1) beweglich angeordnet ist und die Längsneigung des Erntegutaufnahmegerätes (2) um die Querachse (11) in Abhängigkeit von wenigstens zwei ermittelten Abständen (31;32;33;34;35) zum Boden in Verbindung mit wenigstens einer Sollarbeitslage, insbesondere einem gewählten Schnittwinkel, von wenigstens einer Steuereinrichtung (42) automatisch eingestellt wird.

15. Verfahren nach wenigstens einem der vorherigen Ansprüche 12 bis 14,
**dadurch gekennzeichnet, dass**
aus wenigstens zwei in Fahrrichtung (29) voneinander beabstandeten ermittelten Abständen (32,34;31,33) und dem Verlauf der Verbindungsstrecke (58;61) zwischen den Abtaststellen (51;59;62;63), die Schnitthöhe (28;28') an wenigstens einer Schnittstelle (60), eines als Schneidwerk (2) ausgebildeten Erntegutaufnahmegerätes bestimmt und von wenigstens einer Steuereinrichtung (42), die ermittelte Schnitthöhe (28') in Verbindung mit einer gewählten Schnitthöhe automatisch korrigiert eingestellt wird.

16. Verfahren nach wenigstens einem der vorherigen Ansprüche 12 bis 15,
**dadurch gekennzeichnet, dass**
aus wenigstens zwei in Fahrrichtung (29) voneinander beabstandeten und wenigstens zwei quer zur Fahrtrichtung (29) voneinander beabstandeten Abständen (31;32;33,34;35) eine Bodenfläche (36) berechnet und anhand des Verlaufs der Verbindungsstrecke (66) auf dieser Bodenfläche (36), die Schnitthöhe (28;28') und die Querneigung des Messerbalken (20) und anhand der Längsneigung der Verbindungsstrecke (67) auf dieser Bodenfläche (36), der Schnittwinkel des Messerbalkens (20) bestimmt und der Messerbalken (20) zur Einhaltung eines vorgewählten Schnittwinkels und einer vorgewählten Schnitthöhe (28;28') in Abhängigkeit von den ermittelten Einstellungen des Messerbalkens (20) gegenüber der Bodenfläche (36), von wenigstens einer Steuereinrichtung (42), automatisch eingestellt wird.

## Claims

1. Apparatus for the positional control of a crop material pickup device (2) on an agricultural harvesting machine, in particular a combine harvester (1) or a forage harvester, comprising a crop material pickup device (2) arranged thereon at least movably in respect of height and at least one measuring device (17, 35, 48) for determining the spacing of the crop material pickup device (2) relative to the ground (39), wherein the position of the crop material pickup device (2) relative to the ground (39) is adjustable by at least one control device (42) of the agricultural harvesting machine in dependence on the determined ground spacing,
**characterised in that**
the at least one measuring device (17, 35, 48) determines the spacing (31, 32, 33, 34, 35) relative to the ground (39) at at least two locations which are spaced from each other in the travel direction (29) and the control device (42) calculates from the at least two spacings (31, 32, 33, 34, 35) the inclination of the ground (39) in the travel direction (29) relative to the crop material pickup device (2).

2. Apparatus according to claim 1 **characterised in that** the at least one measuring device (17, 35, 48) simultaneously ascertains the spacing (31, 32, 33, 34, 35) relative to the ground (39) at at least two locations (51, 52) which are spaced from each other in the travel direction (29).

3. Apparatus according to at least one of preceding claims 1 and 2 **characterised in that** the at least one measuring device (17, 35, 48) ascertains a first spacing (31, 32) relative to the ground (39) at a location (51, 52, 53, 54) which in the travel direction (29) is in front of crop material pickup by the crop material pickup device (2) and at least one further spacing (33, 34, 35) relative to the ground (39) at a location (59) which in the travel direction (29) is behind crop material pickup by the crop material pickup device (2).

4. Apparatus according to at least one of preceding claims 1 to 3 **characterised in that** the at least one measuring device (17, 35, 48) on the agricultural harvesting machine (1) ascertains the spacing (31, 32, 33, 34, 35) relative to the ground (39) at at least two locations (52, 53) which are one behind the other on a track in the travel direction (29).

5. Apparatus according to at least one of preceding claims 1 to 4 **characterised in that** the crop material pickup device (2) is carried arranged movably in respect of height by an intake passage (3) on the agricultural harvesting machine (1) and at least one measuring device (19, 35) is arranged at the side of the intake passage (3), that is towards the crop material pickup device (2).

6. Apparatus according to at least one of preceding claims 1 to 5 **characterised in that** at least two measuring devices (21, 22, 23, 48, 55) arranged spaced from each other transversely with respect to the travel direction (29) respectively ascertain at least one spacing (31, 32, 33, 34, 35) relative to the ground (39).

7. Apparatus according to at least one of preceding claims 1 to 6 **characterised in that** the at least one measuring device (48, 55) ascertains the spacing (31, 32, 33, 34, 35) relative to the ground (39) by means of a sensing hoop (21, 21', 22, 22', 23).

8. Apparatus according to at least one of preceding claims 1 to 7 **characterised in that** the at least one measuring device (47, 48, 49, 55) contactlessly ascertains the spacing (31, 32, 33, 34, 35) relative to the ground (39).

9. Apparatus according to at least one of preceding claims 1 to 8 **characterised in that** the at least one measuring device (48, 55) arranged above the crop material (46) ascertains the spacing (31, 32, 33, 34, 35) relative to the ground (39).

10. Apparatus according to at least one of preceding claims 1 to 9 **characterised in that** the at least one measuring device (48, 55) in the form of an edge sensor (55) ascertains at least one spacing (31, 32, 33, 34, 35) relative to the ground (39).

11. Apparatus according to at least one of preceding claims 1 to 10 **characterised in that** at least one inclination of the crop material pickup device (2) with respect to a horizontal plane is ascertained by an inclination sensor (40) arranged on the crop material pickup device (2) and is used for adjusting at least one parameter of the agricultural harvesting machine.

12. A method of positional control of a crop material pickup device (2) on an agricultural harvesting machine, in particular a combine harvester (1) or a forage harvester, comprising a crop material pickup device (2) arranged thereon at least movably in respect of height and at least one measuring device (17, 35, 48) for determining the spacing of the crop material pickup device (2) relative to the ground (39), wherein the position of the crop material pickup device (2) relative to the ground (39) is adjustable by at least one control device (42) of the agricultural harvesting machine in dependence on the determined ground spacing,
**characterised in that**
the spacing (31, 32, 33, 34, 35) of the crop material pickup device (2) relative to the ground (39) at at least two locations which are spaced from each other in the travel direction (29) is ascertained by at least one measuring device (17, 35, 48) and at least one control device (42) calculates from at least two spacings (31, 32, 33, 34, 35) the inclination of the ground (39) in the travel direction (29) relative to the crop material pickup device (2) and the position of the crop material pickup device (2) is automatically adjusted in dependence on the at least two ascertained spacings (31, 32, 33, 34, 35) and in conjunction with at least one reference working position by the control device (42).

13. A method according to claim 12 **characterised in that** the crop material pickup device (2) is arranged movably with respect to the agricultural harvesting machine (1) about a longitudinal axis (45) in the direction of travel (29) and the transverse inclination of the crop material pickup device (2) about the longitudinal axis (45) is automatically adjusted in dependence on at least two ascertained spacings (31, 32, 33, 34, 35) relative to the ground in conjunction with at least one reference working position, in particular a selected cutting height (28), by at least one control device (42).

14. A method according to at least one of preceding claims 12 and 13 **characterised in that** the crop material pickup device (2) is arranged movably with respect to the agricultural harvesting machine (1) about a transverse axis (11) extending horizontally transversely with respect to the direction of travel (29) and the longitudinal inclination of the crop material pickup device (2) about the transverse axis (11) is automatically adjusted in dependence on at least two ascertained spacings (31, 32, 33, 34, 35) relative to the ground in conjunction with at least one reference working position, in particular a selected cutting angle, by at least one control device (42).

15. A method according to at least one of preceding claims 12 to 14 **characterised in that** the cutting height (28, 28') at at least one cutting location (60) of a crop material pickup device in the form of a cutting mechanism (2) is determined from at least two ascertained spacings (32, 34, 31, 33) spaced from each other in the direction of travel (29) and the configuration of the connecting section (58, 61) between the sensing locations (51, 59, 62, 63) and the ascertained cutting height (28') is automatically correctedly adjusted in conjunction with a selected cutting height by at least one control device (42).

16. A method according to at least one of preceding claims 12 to 15 **characterised in that** a ground surface (36) is calculated from at least two spacings (31, 32, 33, 34, 35) which are spaced from each other in the direction of travel (29) and at least two spacings which are spaced from each other transversely with respect to the direction of travel (29) and the cutting height (28, 28') and the transverse inclination of the cutter bar (20)
is determined by reference to the configuration of the connecting section (66) on said ground surface (36) and the cutting angle of the cutter bar (20) is determined by reference to the longitudinal inclination of the connecting section (67) on said ground surface (36) and the cutter bar (20) is automatically adjusted by at least one control device (42) to maintain a preselected cutting angle and a preselected cutting height (28, 28') in dependence on the ascertained settings of the cutter bar (20) with respect to the ground surface (36).

## Revendications

1. Appareil pour le réglage de la position d'un dispositif ramasseur (2) au niveau d'une récolteuse, en particulier une moissonneuse-batteuse (1) ou une ramasseuse-chargeuse, avec un dispositif ramasseur (2) agencé sur celle-ci de manière au moins réglable en hauteur et avec au moins un dispositif de mesure (17, 35, 48) pour la détermination de la distance du dispositif ramasseur (2) par rapport au sol (39), la position du dispositif ramasseur (2) pouvant être réglée par rapport au sol (39) par au moins un dispositif de réglage (42) de la récolteuse en fonction de la distance au sol déterminée,
**caractérisé en ce**
**que** l'au moins un dispositif de mesure (17, 35, 48) détermine la distance (31, 32, 33, 34, 35) par rapport au sol (39) à au moins deux endroits distants l'un de l'autre dans le sens de la marche (29) et le dispositif de réglage (42) calcule à partir des au moins deux distances (31, 32, 33, 34, 35), l'inclinaison du sol (39) dans le sens de la marche (29) par rapport au dispositif ramasseur (2).

2. Appareil selon la revendication 1,
**caractérisé en ce que**
l'au moins un dispositif de mesure (17 ; 35 ; 48) détermine simultanément la distance (31 ; 32 ; 33 ; 34 ; 35) par rapport au sol (39) à au moins deux endroits (51 ; 52) distants l'un de l'autre dans le sens de la marche (29),

3. Appareil selon au moins l'une quelconque des revendications précédentes 1 à 2,
**caractérisé en ce que**
l'au moins un dispositif de mesure (17 ; 35 ; 48) détermine une première distance (31 ; 32) par rapport au sol (39) à un endroit (51 ; 52 ; 53 ; 54) situé dans le sens de la marche (29) devant le ramassage des produits récoltés du dispositif ramasseur (2) et au moins une autre distance (33 ; 34 ; 35) par rapport au sol (39) à un endroit (59) situé dans le sens de la marche (29) derrière le ramassage des produits récoltés du dispositif ramasseur (2).

4. Appareil selon l'une quelconque des revendications précédentes 1 à 3,
**caractérisé en ce que**
l'au moins un dispositif de mesure (17 ; 35 ; 48) détermine au niveau de la récolteuse (1), la distance (31 ; 32 ; 33 ; 34 ; 35) par rapport au sol (39) à au moins deux endroits (52 ; 53) situés l'un derrière l'autre dans le sens de la marche (29) sur un sillon.

5. Appareil selon au moins l'une quelconque des revendications précédentes 1 à 4,
**caractérisé en ce que**
le dispositif ramasseur (2) est porté disposé de manière réglable en hauteur par le canal d'alimentation (3) au niveau de la récolteuse (1) et au moins un dispositif de mesure (19 ; 35) est agencé du côté tourné vers le dispositif ramasseur (2) du canal d'alimentation (3).

6. Appareil selon au moins l'une quelconque des revendications précédentes 1 à 5,
**caractérisé en ce que**
au moins deux dispositifs de mesure (21 ; 22 ; 23 ; 48 ; 55) agencés à distance l'un de l'autre de manière transversale au sens de la marche (29) déterminent respectivement au moins une distance (31 ; 32 ; 33 ; 34 ; 35) par rapport au sol (39).

7. Appareil selon au moins l'une quelconque des revendications précédentes 1 à 6,
**caractérisé en ce que**
l'au moins un dispositif de mesure (48 ; 55) détermine la distance (31 ; 32 ; 33 ; 34 ; 35) par rapport au sol (39) au moyen d'un étrier palpeur (21, 21' ; 22 ; 22' ; 23).

8. Appareil selon au moins l'une quelconque des revendications précédentes 1 à 7,
**caractérisé en ce que**
l'au moins un dispositif de mesure (47 ; 48 ; 49 ; 55) détermine sans contact la distance (31 ; 32 ; 33 ; 34 ; 35) par rapport au sol (39).

9. Appareil selon au moins l'une quelconque des revendications précédentes 1 à 8,
**caractérisé en ce que**
l'au moins un dispositif de mesure (48 ; 55) agencé au-dessus des produits récoltés (46) détermine la distance (31 ; 32 ; 33 ; 34 ; 35) par rapport au sol (39).

10. Appareil selon au moins l'une quelconque des revendications précédentes 1 à 9,
**caractérisé en ce que**
l'au moins un dispositif de mesure (48 ; 55) réalisé sous forme de capteur de bords (55) détermine au moins une distance (31 ; 32 ; 33 ; 34 ; 35) par rapport au sol (39).

11. Appareil selon au moins l'une quelconque des revendications précédentes 1 à 10,
**caractérisé en ce que**
au moins une inclinaison du dispositif ramasseur (2) est déterminée par rapport à un plan horizontal d'un capteur d'inclinaison (40) agencé au niveau du dispositif ramasseur (2) et est utilisée au moins pour le réglage d'au moins un paramètre de la récolteuse.

12. Procédé pour le réglage de la position d'un dispositif ramasseur (2) au niveau d'une récolteuse, en particulier une moissonneuse-batteuse (1) ou une ramasseuse-chargeuse, avec un dispositif ramasseur (2) agencé sur celle-ci de manière au moins réglable en hauteur et avec au moins un dispositif de mesure (17, 35, 48) pour la détermination de la distance du dispositif ramasseur (2) par rapport au sol (39), la position du dispositif ramasseur (2) pouvant être réglée par rapport au sol (39) par au moins un dispositif de réglage (42) de la récolteuse en fonction de la distance au sol déterminée,
**caractérisé en ce**
**que** la distance (31, 32, 33, 34, 35) du dispositif ramasseur (2) par rapport au sol (39) est déterminée par l'au moins un dispositif de mesure (17, 35, 48) à au moins deux endroits distants l'un de l'autre dans le sens de la marche (29) et au moins un dispositif de réglage (42) calcule à partir d'au moins deux distances (31, 32, 33, 34, 35), l'inclinaison du sol (39) dans le sens de la marche (29) par rapport au dispositif ramasseur (2) et la position du dispositif ramasseur (2) est réglée automatiquement par le dispositif de réglage (42) en fonction des au moins deux distances (31, 32, 33, 34, 35) déterminées et en relation avec au moins une position de travail de consigne.

13. Procédé selon la revendication 12,
**caractérisé en ce que**
le dispositif ramasseur (2) est agencé de manière mobile autour d'un axe longitudinal (45) situé dans le sens de la marche (29) par rapport à la récolteuse (1) et l'inclinaison transversale du dispositif ramasseur (2) autour de l'axe longitudinal (45) est réglée automatiquement par au moins un dispositif de réglage (42) en fonction d'au moins deux distances (31 ; 32 ; 33 ; 34 ; 35) déterminées par rapport au sol en relation avec au moins une position de travail de consigne, en particulier une hauteur de coupe (28) sélectionnée.

14. Procédé selon au moins l'une quelconque des revendications 12 ou 13,
**caractérisé en ce que**
le dispositif ramasseur (2) est agencé de manière mobile autour d'un axe transversal (11) situé à l'horizontale transversalement au sens de la marche (29) par rapport à la récolteuse (1) et l'inclinaison longitudinale du dispositif ramasseur (2) autour de l'axe transversal (11) est réglée automatiquement par au moins un dispositif de réglage (42) en fonction d'au moins deux distances (31 ; 32 ; 33 ; 34 ; 35) déterminées par rapport au sol en relation avec au moins une position de travail de consigne, en particulier une hauteur de coupe sélectionnée.

15. Procédé selon au moins l'une quelconque des revendications précédentes 12 à 14,
**caractérisé en ce que**
la hauteur de coupe (28 ; 28') est déterminée au niveau d'au moins une interface (60), d'un dispositif ramasseur réalisé sous forme d'outil de coupe (2) à partir d'au moins deux distances (32 ; 34 ; 31 ; 33) déterminées à distance l'une de l'autre dans le sens de la marche (29) et de l'allure du parcours de liaison (58 ; 61) entre les endroits palpés (51 ; 59 ; 62 ; 63) et la hauteur de coupe (28') déterminée est réglée corrigée automatiquement par au moins un dispositif de réglage (42), en relation avec une hauteur de coupe sélectionnée.

16. Procédé selon au moins l'une quelconque des revendications précédentes 12 à 15,
**caractérisé en ce que**
une surface au sol (36) est calculée à partir d'au moins deux distances (31 ; 32 ; 33 ; 34 ; 35) à distance l'une de l'autre dans le sens de la marche (29) et d'au moins deux distances à distance l'une de l'autre transversalement au sens de la marche (29), et la hauteur de coupe (28 ; 28') et l'inclinaison transversale de la barre porte-lames (20) sont déterminées à l'aide de l'allure du parcours de liaison (66) sur cette surface au sol (36) et l'angle de coupe de la barre porte-lames (20) à l'aide de l'inclinaison longitudinale du parcours de liaison (67) sur cette surface au sol (36) et la barre porte-lames (20) est réglée automatiquement par au moins un dispositif de réglage (42) pour le respect d'un angle de coupe présélectionné et d'une hauteur de coupe présélectionnée (28, 28') en fonction des réglages déterminés de la barre porte-lames (20) par rapport à la surface au sol (36).
